# EUROPÄISCHE PATENTSCHRIFT

(11) **EP 1 613 695 B1**
(45) Veröffentlichungstag und Bekanntmachung des Hinweises auf die Patenterteilung: **27.07.2011**
(21) Anmeldenummer: 04727490.7
(22) Anmeldetag: 15.04.2004
(51) Int. Cl.: C08L 29/04

(54) **POLYVINYLALKOHOL GELE**
POLYVINYL ALCOHOL GELS
GELS D'ALCOOL POLYVINYLIQUE

(30) Priorität: 15.04.2003 DE 10317418
(43) Veröffentlichungstag der Anmeldung: 11.01.2006
(73) Patentinhaber: InnoGEL AG, 6331 Hünenberg (CH)
(72) Erfinder: MÜLLER, Rolf, CH-8055 Zürich (CH); INNEREBNER, Federico, CH-8049 Zürich (CH)
(74) Vertreter: Becker Kurig Straus
(86) Internationale Anmeldenummer: PCT/CH2004/000231
(87) Internationale Veröffentlichungsnummer: WO 2004/092264

(56) Entgegenhaltungen:
- JP-B- 48 030 462
- US-A- 4 542 013
- PATENT ABSTRACTS OF JAPAN Bd. 1995, Nr. 08, 29. September 1995 (1995-09-29) & JP 7 117327 A (NIPPON SYNTHETIC CHEM IND CO LTD:THE; others: 03), 9. Mai 1995 (1995-05-09)
- PATENT ABSTRACTS OF JAPAN Bd. 0177, Nr. 08 (C-1147), 24. Dezember 1993 (1993-12-24) & JP 5 245138 A (TERUMO CORP), 24. September 1993 (1993-09-24)

## Beschreibung

Die vorliegende Erfindung betrifft Polyvinylalkohol Gele, insbesondere Hydrogele, die mittels neuer Verfahren und Rezepturen hergestellt werden und ein in weiten Bereichen einstellbares Eigenschaftsprofil aufweisen, bsw. herausragende mechanische Eigenschaften.

### Stand der Technik

Polyvinylalkohol (PVA), der bsw. durch Hydrolyse von Polyvinylacetat erhalten werden kann, ist biologisch fast vollständig abbaubar und bei erhöhter Temperatur gut wasserlöslich. Hydrogele auf Basis von PVA können mit der Konsistenz von biologischem Gewebe und Knorpel hergestellt werden und weisen im lebenden Organismus eine herausragende Stabilität und Biokompatibilität auf, welche einerseits im hohen Wassergehalt dieser Gele und andererseits im Makromolekül selbst begründet ist, das vom Organismus infolge der zahlreichen Hydroxyl Gruppen ähnlich wie Wasser, pointiert ausgedrückt, "als polymerisiertes langkettiges Wasser wahrgenommen wird". Daher sind PVA Gele (PVAG) für Anwendungen im lebenden Organismus geradezu prädestiniert, insbesondere PVAG die ohne chemische Vernetzung, ohne Strahlenvemetzung und ohne Beihilfe von problematischen Chemikalien hergestellt werden.

Bei den bisherigen Verfahren zur Herstellung von solchen PVAG wird in einem ersten Schritt bei erhöhten Temperaturen von bsw. 120°C eine Lösung von PVA hergestellt, die auf Raumtemperatur abgekühlt in eine Form gegossen werden kann. Nachfolgend werden verschiedene Verfahren zur Gelbildung angewandt, wobei die PVA Lösung mindestens einmal eingefroren und dann wieder aufgetaut wird (freeze/thaw). Typischerweise ist das Lösungsmittel Wasser, weisen die PVA Lösungen eine Konzentration Cp von PVA im Bereich von 5-15% auf und werden sie mit Abkühlraten von etwa 0.1°C/min auf Temperaturen von rund -15 bis -30°C abgekühlt, etwa 1 - 24h bei dieser Temperatur belasten und dann mit etwa 0.1°C/min wieder aufgetaut. Nach einem soichen Zyklus sind die PVAG opak und sehr weich. Sie können bereits bei Berührung beschädigt werden, die Festigkeit sm eines PVAG mit Cp = 15% bsw. liegt im Bereich von 0.04MPa und der E-Modul E im Bereich von 0.01 MPa. Durch Wiederholung der freeze/thaw Behandlung werden die mechanischen Eigenschaften kontinuierlich verbessert, nach 10 Zyklen bsw. liegt die Festigkeit sm im Bereich von 1MPa und der E-Modul im Bereich von 0.1 MPa. Nach weiteren Zyklen werden die mechanischen Eigenschaften nur noch geringfügig verbessert. Solche PVAG sind im Stand der Technik vielfach beschreiben, bsw. von F. Yokoyama et al in Colloid & Polymer Science (1986), 264, Seiten 595 - 601.

Ein modifiziertes Verfahren ist in US 4734097 beschrieben, wobei ausgehend von einer wässrigen PVA-Lösung z.B. in Beispiel 3 mit Cp = 8% nur ein freeze/thaw Zyklus angewandt wird und die PVA-Wasser Mischung im gefrorenen Zustand durch Einsatz eines Vakuums während 10 Stunden auf eine Konzentration Cp von 42% dehydriert wird. Nach dem Auftauen wurde dann ein weissliches opakes Gel mit einer Festigkeit sm von 0.5MPa erhalten, das für den Einsatz als künstliches Gewebe im menschlichen Körper vorgeschlagen wurde. Mit diesem Verfahren hergestellte PVAG wurden für eine Vielzahl von Anwendungen zum Patent angemeldet, bsw. für künstliche Organe und Membranen in EP 0107055 (artificial organs or membrandes for medical use), als dermale Gele in EP 0095892 (wound-covering materials), für den Einsatz als Kühlmedium in EP 0070986 (gel for use as cooling-medium), als Isolations-Gel für tiefe Temperaturen in JP 57190072, als Phantom für die NMR Diagnose in GB 2209401 (phantoms for NMR diagnosis), oder als Golf Ball Füllung in GB 2182571 (golf ball cores).

Ein weiteres modifiziertes Verfahren ist in US 6231605 beschrieben, wobei ausgehend von einer wässrigen PVA-Lösung z.B. in Beispiel 1 mit Cp = 15% zuerst drei freeze/thaw Zyklen bei -20°C angewandt wurden, wonach das erhaltene Gel in Wasser eingelegt und somit gequollen wurde. Das Gel war in diesem Zustand transparent, aber so schwach, dass es seine Form ausserhalb von Wasser nicht aufrechterhalten konnte. Darauf wurde das gequollene Gel noch 2x einer freeze/thaw Behandlung unterzogen und resultierte dann ein opakes elastisches Gel mit einem E-Modul von rund 0.4MPa. Solche Gele wurden ebenfalls als Gewebe Ersatz im menschlichen Körper vorgeschlagen bsw. für Herzklappen, Gefässe, Sehnen, Knorpe!, Meniskus Harnröhren.

Bei einem weiteren modifizierten Verfahren in US 4663358 wird die PVA-Lösung mittels Mischungen von Wasser und organischen Lösungsmitteln, insbesondere DMSO, hergestellt und dann bei -20°C gefroren. Anschliessend wird das erhaltene Gel in Wasser gelagert um das DMSO grossteils zu extrahieren, in der Atmosphäre getrocknet und dann unter Vakuum getrocknet, um den Rest an DMSO zu extrahieren. Nach Quellung der Proben in Wasser wurden PVAG erhalten, die eine Transparenz von bis 99% zeigten und Festigkeiten bis 5.6MPa aufwiesen. Solche transparente PVAG wurden für Anwendungen im Bereich Biomedizin und für die Lebensmittelindustrie vorgeschlagen.

Die JP 48-030462 offenbart ein Verfahren zur Herstellung eines Polyvinylalkohol Gels, wobei eine Sorte eines Polyvinylalkohols oder eines Polyvinylalkohl-Derivats mit Wasser vermischt wird und zur Verstärkung von Kunststoff-Fasern (z.B. Rayon oder Viny-Ion) beigemischt werden. Das so gewonnene PVAG ist ein Verbundstoff aus PVA und den Kunststoff-Fasern. Auch bei diesem Verfahren erfolgt eine Kältebehandlung bei - 30°C oder bei -40°C während 24 Stunden.

Die JP-5245138 beschreibt ein Verfahren zur Herstellung eines PVAG ebenfalls unter Verwendung nur einer Sorte eines PVA, der zunächst in einem zumindest teilweise polaren Lösungsmittel gelöst wird, die Lösung auf Raumtemperatur abgekühlt wird und schliesslich in ein für den PVA nur schwach oder nicht lösend wirkendes Medium gebracht wird. Durch dieses Verfahren wird ein wässeriges, weiches Gel erhalten, das als Ultraschall-Medium verwendet wird.

Die JP-711327 beschreibt ein Verfahren zur Herstellung eines dünnen Films für den Transferdruck. Das Filmmaterial besteht aus einem ersten PVA-Harz mit einem sehr hohen mittleren DP von mindestens 3200 sowie aus einem zweiten PVA-Harz mit einem mittleren DP von weniger als 3200. Beide PVA-Harz haben einen Verseifungsgrad bzw. Hydrolysegrad DH von 65-95 mol%. Von einem Weichmacher ist nicht die Rede. Es ist fraglich, ob hier überhaut ein Gel gebildet wird. Der mit diesem Verfahren gewonnene Film hat eine kurze Quellungszeit bzw. Erweichungszeit, wenn er auf einer Wasseroberfläche schwimmt.

Die US-4542013 offenbart ein Polymer-Diffusionsmatrix und ein Verfahren zu ihrer Herstellung. Dieses Matrixmaterial enthält eine erste PVA-Komponente mit einem Molekulargewicht im Bereich von etwa 5.000 bis etwa 40.000 sowie eine zweite PVA-Komponente mit einem Molekulargewicht im Bereich von etwa 90.000 bis etwa 150.000, was DP-Bereichen von 114 bis 909 bzw. von 2045 bis 3409 entspricht.

Wie erwähnt weisen die genannten Verfahren zur Herstellung von biokompatiblen PVAG die Gemeinsamkeit auf, dass von einer giessfähigen Lösung ausgegangen und mindestens ein freeze/thaw Zyklus angewandt wird. Dem Fachmann ist bekannt, dass mit der Konzentration Cp des eingesetzten PVA in der Lösung, mit zunehmendem Polymerisationsgrad DP und mit zunehmendem Hydrolysegrad die mechanischen Eigenschaften der bei den diversen Verfahrensvarianten erhaltenen PVAG zunehmen. Die Parameter Cp und DP können bei diesen Verfahren jedoch nicht unabhängig voneinander optimiert werden, da vorteilhafte höhere Polymerisationsgrade DP die Viskosität der Lösung stark ansteigen lassen, sodass die Herstellung einer Lösung problematisch wird und sie nicht mehr giessfähig ist. Maximale Lösungsviskositäten liegen im Bereich von 10'000 mPas. Bsw. Mowiol 66-100, einer der höchstmolekularen kommerziell erhältlichen PVAs mit einem Hydrolysegrad DH von 99.4mol% und einem Polymerisationsgrad DP von rund 4'500 weist bei einer Konzentration Cp von 10% bei Raumtemperatur bereits die maximal verarbeitbare Viskosität von 10'000 mPas auf, bei 80°C liegt die limitierende Konzentration Cp bei etwa 15%. Bei höhermolekularen PVA liegt die limitierende Konzentration noch tiefer. Dies ist ein wesentlicher Nachteil der bisherigen Verfahren. Ein weiterer Nachteil besteht in der langen Zeitdauer, welche die bisherigen Verfahren benötigen, ein einziger freeze/thaw Zyklus bsw. dauert mindestens 24h, eine Dehydrierung durch Lyophilisierung um 10h, die Entfernung von organischen Lösungsmitteln Tage. Insgesamt ist es wünschenswert, höhere Konzentrationen Cp verarbeiten zu können, einfachere und kürzere Verfahren zu entwickeln, die mechanischen Eigenschaften von PVAG zu verbessern (höhere Festigkeiten und E-Moduli) und Transparenz auch in reinen PVA-Wasser Systemen ohne die Beihilfe von organischen Lösungsmittel zu erreichen, die zu 100% wieder entfernt werden müssen, was in der Praxis kaum möglich ist, da immer Spuren davon erhalten bleiben.

Die vorliegende Erfindung beschreibt neue Möglichkeiten bezüglich der Art der eingesetzten PVA und neue Verfahren, wodurch diese Ziele erreicht werden können und Polyvinylalkohol Gele mit massgeschneiderten Eigenschaften für verschiedene Anwendungen erhalten werden.

### Kurze Beschreibung der Erfindung

Die Erfindung umfasst Massnahmen bezüglich der Art der eingesetzten PVA und des Verfahrens, wobei beide Massnahmen einzeln oder in Kombination angewendet werden können:

### Art der eingesetzten PVA

Während bisher für PVAG mit hohen Festigkeiten und E-Moduli vorzugsweise vollhydrolysierte PVA mit höchsten Polymerisationsgraden DP von bis zu etwa 18'000 eingesetzt wurden, wird in dieser Erfindung zumindest teilweise ein gegenteiliger Ansatz angewandt.

Einerseits wird ein erster vorzugsweise vollhydrolysierter PVA1 mit hohem DP eingesetzt, andererseits kommt in Kombination mit solchem PVA1 auch ein vorzugsweise vollhydrolysierter PVA2 mit mittlerem und insbesondere niederem DP im Bereich von etwa 1000 - 50 zum Einsatz. Es ist unmittelbar klar, dass durch die Mischung von PVA1 und PVA2 die Viskosität der Lösung herabgesetzt wird und höhere Konzentrationen Cp mittels Lösungsverfahren verarbeitet werden können. Mowiol 3-98 mit DP = 360 bsw. weist bei Cp = 20% und bei RT eine Viskosität von nur 100 mPas auf und erst bei Cp von etwa 60% wird bei RT die limitierende Viskosität von 10'000mPas erreicht. Bei 100°C kann Cp sogar bis etwa 70% betragen.

Zunächst würde man erwarten, dass durch den Anteil an PVA2 die mechanischen Eigenschaften der resultierenden PVAG reduziert werden, der Vorteil der höheren Lösungskonzentration also dadurch mindestens teilweise wieder aufgehoben wird. Überraschenderweise wurde jedoch ein gegenteiliger Effekt festgestellt. Wird bei gleich bleibendem Cp ein Anteil an PVA1 durch PVA2 ersetzt, resultieren PVAG mit höheren E-Moduli, womit sich der vermeintliche Nachteil als Vorteil herausstellt und zum offensichtlichen Vorteil der höheren Lösungskonzentration Cp hinzukommt. Diese Wirkung von PVA2 ist damit erklärbar, dass kurzkettige PVA sehr gut, d.h. schnell und vollständig kristallisieren können, wodurch der kristalline Anteil des PVAG erhöht wird. Weiter findet eine Heterokristallisation von PVA1 und PVA2 statt, d.h. die Kristallite, welche die Verknüpfungspunkte des das Gel konstituierenden Netzwerks bilden, weisen sowohl PVA1 als auch PVA2 Makromoleküle auf, wobei die kürzerkettigen PVA2 Makromoleküle die Kristallisation von Segmenten von PVA1 Makromolekülen zu Heterokristalliten induzieren. Es werden somit insgesamt höhere Netzwerkdichten erreicht, d.h. engmaschigere Netzwerke und somit höhere E-Moduli der resultierenden PVAG.

Durch den Einsatz von PVA3, welche Langkettenverzweigungen mit einem DP dieser Langketten von > 50 ist eine weitere Verbesserung der mechanischen Eigenschaften von PVAG möglich, insbesondere wenn PVA3 in Kombination mit PVA2 und/oder PVA1 eingesetzt wird. Indem die verschiedenen Seitenketten durch Heterokristallisation in verschiedene Kristallite eingebaut werden, entstehen zusätzliche Verknüpfungspunkte des Netzwerks, wobei diese Verknüpfungspunkte dann kovalenter Natur sind.

### Verfahren

Eine weitere Möglichkeit zur Erhöhung der Konzentration Cp des PVA-Wasser Systems besteht darin, dass thermoplastische Verfahren eingesetzt werden, wobei anstelle der PVA-Lösung eine PVA-Schmelze hergestellt wird und mit Viskositäten weit oberhalb von 10'000 mPas verfahren werden kann. Somit können auch höchstmolekulare PVA bei Konzentrationen Cp » 15% in den amorphen Zustand gebracht werden, woraus die Gelbildung möglich wird. Die Formgebung ist dann nicht mehr durch die übliche Giesstechnik möglich, doch können Formkörper analog der Methoden, die in der Verarbeitung von thermoplastischen Kunststoffen angewandt werden, erhalten werden, bsw. durch Druck- und Spritzguss oder Extrusions- und Pressverfahren. Während bisher Konzentrationen Cp im Bereich von 5 bis maximal 30% (abhängig vom DP des PVA) üblich waren, ist nun auch der Bereich von 30 bis etwa 90% möglich, wobei auch tiefere Konzentrationen Cp als 30% mit diesem Verfahren möglich sind, was insbesondere bei sehr hohen DP der Fall ist. Mit der Zunahme von Cp, beim Übergang von Lösungen zu Schmelzen zeigen PVA-Wasser Mischungen bezüglich der Gelbildung im Vergleich zur Gelbildung aus der Lösung zunehmend ein ganz anderes Verhalten. Während beim freeze/thaw Verfahren durch den Gefriervorgang dem PVA Wasser entzogen werden muss (Bildung von Phasen von gefrorenem Eis neben Phasen mit sehr hohem Cp bzw. tiefem Wassergehalt) und dadurch die Kristallisation induziert wird, ist bei dem neuen Verfahren Cp von Anfang an hoch und ist die Anwendung von freeze/thaw Zyklen nicht mehr zwingend notwendig. Die Gel- bzw. Netzwerkbildung durch Kristallisation ist auch bei höheren Temperaturen möglich. Bsw. ist bei Cp um 40% die Gelbildung bei Raumtemperatur ebenso effektiv wie bei der Anwendung von freeze/thaw Zyklen. Je höher Cp eingestellt wird, bei umso höherer Temperatur setzt die Gelbildung ein, sodass sogar Wärmebehandlungen bei Temperaturen > RT zur Anwendung kommen können. Im einfachsten Fall kann eine PVA-Wasser Mischung nach der Formgebung ganz einfach bei RT gelagert werden, wobei die Gelbildung auf einer Zeitskala von Stunden bis Tagen abläuft. Die Festigkeit der erhaltenen PVAG nehmen mit Cp stetig zu, wobei Werte von bsw. 25MPa und E-Moduli von 30MPa eingestellt werden können und ausserdem vollständige Transparenz erhalten werden kann. Werden solcherart hergestellte PVAG in Wasser eingelegt, findet eine Quellung statt, wodurch Cp und die mechanischen Eigenschaften abnehmen. Der Quellgrad wird dabei wesentlich durch die eingestellte Netzwerkdichte bestimmt und kann durch deren Parameter ebenfalls definiert eingestellt, insbesondere minimiert werden. Eine wichtige Rolle spielen dabei die Temperatur der Gelbildung und insbesondere der Einsatz von PVA2, wodurch der Kombination der zwei hier beschriebenen Massnahmen zur Herstellung von neuen Polyvinylalkohol Gelen eine besondere Bedeutung zukommt. Ein weiterer Vorteil beim Einsatz von kurzkettigem PVA2 besteht darin, dass nicht nur die Viskosität von Lösungen bei tiefen Cp, sondern auch die Viskosität von Schmelzen bei hohem Cp massiv reduziert werden kann, wodurch beim Einsatz von thermoplastischen Verfahren die Temperatur bei der Plastifizierung kontrolliert, insbesondere niedrig gehalten werden kann und somit auch Schmelzen mit sehr hohem Cp verarbeitet werden können.

### Ausführliche Beschreibung der Erfindung

### PVA1, PVA2, PVA3

Zur Auswahl der geeigneten PVA-Typen werden drei Gruppen von Parametern unterschieden, die Parameter welche die Regularität der PVA betreffen wie Hydrolysegrade DH, Gehalt G an 1,2-Glycol, Taktizität, und Anteil an Kurzkettenverzweigungen, die Parameter der Molekulargewichtsverteilung wie DPn, DPw, sowie die Parameter zur Topologie der Makromoleküle wie Verzweigungsgrade von Langketten und Länge dieser Lang- bzw. Seitenketten.

Bezüglich der ersten Gruppe von Parametern, werden an PVA1, PVA2 und PVA3 dieselben Anforderungen gestellt, welche eine möglichst gute Kristallisierbarkeit der PVA und eine hohe Stabilität der Kristallite ermöglichen. Somit sind Abweichungen von der idealen Struktur [-CH₂-CHOH-]ₙ anteilmässig möglichst gering zu halten.

Der Hydrolysegrad DH in mol% ist > 95, vorzugsweise > 98, noch bevorzugter > 99, am bevorzugtesten > 99.8.

Der Gehalt G an 1,2-Glycol in mol% ist < 3, vorzugsweise < 1, noch bevorzugter < 0.5, am bevorzugtesten < 0.2.

Die Anzahl an Kurzkettenverzweigungen pro Monomereinheit ist < 10⁻², vorzugsweise < 10⁻³, noch bevorzugter < 10⁻⁴, am bevorzugtesten < 10⁻⁶.

Weitere Störungen der Regularität wie Carbonylgruppen in der Kette sind ebenfalls unerwünscht, bei üblichen PVA ist ihr Anteil mit typischerweise < 0.02mol% jedoch vernachlässigbar.

Bezüglich der Taktizität wird eine ataktische Konformation gegenüber einer isotaktischen bevorzugt, am bevorzugtesten ist eine syndiotaktische Konformation, bez. ein möglichst hoher Anteil an syndiotaktischen Diaden. Die Taktizität von PVA wird durch die Art der Monomere festgelegt, womit das Vorläufer Polymer, woraus dann das PVA erhalten wird, polymerisiert wird, sowie durch die Reaktionsbedingungen bei dieser Polymerisation, wobei mit abnehmender Temperatur während der Polymerisation der syndiotaktische Anteil zunimmt.

Wird das Vorläufer Polymer aus Vinylacetatderivaten der Art CH₂=CHOCOR polymerisiert, wobei R bsw. H, CH₃, C₃H₇, C₄H₉, CClH₂, CCl₃, CF₃ C₄H₅F₄, C₆H₇F₆, oder C₆H₅ sein kann, so nimmt der Anteil an syndiotaktischen Diaden mit dem Volumen der Gruppe R zu (während der 1,2-Glycolgehalt vorteilhaft abnimmt) und die im Vorläufer Polymer erhaltene Taktizität bleibt bei der nachfolgenden Hydrolyse zum PVA erhalten. Bevorzugt sind daher Monomere zur Polymerisation des Vorläufer Polymers wie Vinylacetat, Vinylchloroacetat, Vinyldichloroacetat, Vinylbromoacetat, insbesondere Vinyltrifluoroacetat.

Wird das Vorläufer Polymer aus aliphatischen Vinylsäureestern hergestellt, werden ebenfalls hohe Anteile an syndiotatkischen Diaden erhalten, während die resultierenden PVA ausserdem sehr niedrige 1,2-Glycol Gehalte aufweisen. Beispiele sind Vinylformat, Vinylpropionat, Vinylbutyrat, Vinylpivalat. Mittels Vinylpivalat können auch sehr hohe Molekulargewichte erreicht werden.

Vollhydrolysierte PVA erhalten aus Polyvinylacetat sind auch bei hohen Kristallisationsgraden bei 100°C in Wasser löslich, während vollhydrolysierte PVA deren Vorläufer Polymer aus Vinylacetatderivaten mit voluminöser Gruppe R (z.B. Vinyltrifluoroacetat) oder aus aliphatischen Vinylsäureestern (z.B. Vinylfromat, Vinylpivalat) hergestellt wurden infolge des geringen 1,2-Glycolgehalt und des hohen Anteils an syndiotaktischen Diaden selbst bei 100°C in unlöslicher Form erhalten werden können. Daraus wird die Bedeutung dieser Parameter für die Kristallisierbarkeit und die Stabilität der Kristallite deutlich. Solche PVA sind darum für die vorliegende Erfindung ganz besonders geeignet.

Bezüglich der Molekulargewichtsverteilung werden an PVA1, PVA2 und PVA3 unterschiedliche Anforderungen gestellt. Für bisherige, auf nur einem PVA basierende PVAG wird in der Literatur als eine untere Grenze für den mittleren Polymerisationsgrad DP typischerweise ein Wert von 1000 bis 1500 angegeben, wobei die Art des Mittelwertes (DPn, DPw, DPv) meist nicht spezifiziert wird. Die Polydispersität P = DPw/DPn von aus Polyvinylacetat durch Verseifung erhaltenem PVA liegt im Bereich von etwa 2 - 2.5, womit eine Umrechung dieser Mittelwerte und eine Interpretation möglich sind. Bei DP um 500 werden nach bisherigen Methoden bröckelige und brüchige PVAG erhalten. Dies ist dadurch verständlich, dass die Makromoleküle nicht lang genug sind, um effektive Verbindungen zwischen Kristalliten zu bilden. Somit können die Kristallite leicht aneinander abgleiten und es wird kaum Festigkeit erhalten. Mit abnehmendem DP nimmt diese bröckelige Konsistenz weiter zu. Eine Voraussetzung für effektive Verbindungen ist, dass mindestens zwei Segmente eines Makromoleküls in mindestens zwei Kristallite eingebaut werden. Mit zunehmendem DP nimmt die Zahl der Kristallite, woran verschiedene Segmente eines PVA Makromoleküls beteiligt sind zu und werden mechanisch stabilere und zunehmend elastische Netzwerke erhalten, weshalb bei bisherigen PVAG möglichst hohe DP vorteilhaft sind. Die Tatsache, dass bei tiefen DP nur bröckelige und brüchige PVAG erhalten werden, mag ein Grund gewesen sein, warum bisher tiefe DP für PVAG nicht in Betracht gezogen wurden.

Für PVA1 und PVA3 werden für die vorliegende Erfindung PVA mit DP > 1000, vorzugsweise > 2000, noch bevorzugter > 3000, am bevorzugtesten > 5000 eingesetzt. Die obere Grenze ist durch den Stand der Technik zur Herstellung von höchstmolekularen PVA gegeben, wobei gegenwärtig PVA mit DP bis etwa 18'000 herstellbar sind.

Für PVA2 werden PVA mit vergleichsweise tiefen DP eingesetzt, einerseits um die Viskosität der Lösungen und Schmelzen zu reduzieren, andererseits um hohe Kristallisationsgeschwindigkeiten und Kristallinitätsgrade, sowie hohe Netzwerkdichten zu erhalten. PVA2 wird für die vorliegende Erfindung mit DP im Bereich von etwa 50 - 1000, vorzugsweise 60 - 500, noch bevorzugter 70 - 300, am bevorzugtesten 75 - 200 eingesetzt. Die untere Grenze ist durch die Stabilität der durch PVA2 gebildeten Kristallite gegeben (wobei durch Heterokristallisation Segmente von PVA1 und PVA3 eingebaut sind). Die Lamellendicke dieser Kristallite ist bei tiefen DP direkt proportional zum DP und die Stabilität gegenüber Temperatur und Lösungsmittel (Wasser) nimmt mit der Lamellendicke zu. Bei hohen DP nimmt die Lamellendicke meist wieder ab, da dann die Makromoleküle nicht mehr in der voll gestreckten Konformation kristallisieren, sondern vorzugsweise eine Rückfaltung stattfindet und tiefere Lamellendicken resultieren. Somit kann durch die Wahl geeigneter DP von PVA2 auch ein positiver Effekt bezüglich der Stabilität der Kristallite erhalten werden, was insbesondere für in vivo Anwendungen von PVAG bedeutsam ist. Der diesbezüglich optimale DP Bereich liegt bei etwa 75 - 200.

Betreffend der Polydispersität P = DPw/DPn der drei PVA Typen, insbesondere bei PVA2, ist P < 5 bevorzugt, noch bevorzugter < 3, am bevorzugtesten < 2.

Bezüglich der Topologie sind übliche PVA vorwiegend linear, Langkettenverzweigungen treten bei üblichen PVA wenn überhaupt, dann selten auf. Nahezu vollständige oder vollständige Linearität wird bei kurzkettigen PVA2 bevorzugt, wobei diese Bedingung praktisch immer erfüllt ist, während langkettige PVA1 nicht notwendigerweise möglichst linear sein müssen, ein Anteil an Langkettenverzweigungen kann bei PVA1 sogar vorteilhaft sein, wenn die Länge dieser Seitenketten einen DP > 50 aufweist. Bei PVA3 hingegen ist ein nennenswerter Anteil an Langkettenverzweigungen für dessen Funkti-onalität das entscheidende Eigenschaftsmerkmal, wobei für die Polymerisationsgrade DP dieser Lang- bzw. Seitenketten dieselben Anforderungen gelten wie für die DP von PVA2. Somit ist es möglich, dass die verschiedenen Seitenketten eines Makromoleküls PVA3 in verschiedene Kristallite eingebaut werden können (zusammen mit PVA1 und/oder PVA2), wodurch eine zusätzliche Vernetzung dieser Kristallite resultiert, also höhere Netzwerkdichten erhalten werden. PVA vom Typ PVA3 sind gegenwärtig kommerziell nicht erhältlich. Von PVA erhalten aus Polyvinylbenzoat ist jedoch bekannt, dass bei geeigneten Reaktionsbedingungen bei der Polymerisation von Vinylbenzoat Langkettenverzweigungen erhalten werden können. Eine weitere Möglichkeit zur Herstellung von PVA3 kann durch Aufpfropfen von PVA vom Typ PVA2 auf PVA vom Typ PVA1 erfolgen, wobei die Anzahl und Länge der Seitenketten eingestellt werden kann.

### Mischungen

Der Anteil an PVA2 bezogen auf PVA in Gew.% liegt im Bereich 1 - 95, vorzugsweise 2 - 90, am bevorzugtesten 3 - 85. Ein hoher Anteil an PVA2 ist insbesondere zur Einstellung von hohen E-Moduli vorteilhaft, wobei erstaunlicherweise immer noch sehr hohe Dehnungen erhalten werden.

Der Anteil an PAV3 bezogen auf PVA in Gew.% liegt im Bereich 1 - 80, vorzugsweise 2 - 60, am bevorzugtesten 3 - 50.

Der Anteil an PVA bezogen auf PVA und Quellungsmittel in Gew.% liegt im Bereich 5 - 90, vorzugsweise 7 - 95, am bevorzugtesten 10-80.

### Aufbereitung und Gelbildung

Bei Konzentrationen Cp von Polyvinylalkohol < 30% findet die Gelbildung bevorzugt mittels freez/thaw Verfahren bzw. mit den im Stand der Technik beschriebenen Varianten davon statt, wobei jedoch beim Einsatz von PVA2 einerseits infolge einer Reduktion der Viskosität höhere Konzentrationen als Lösungen verarbeitet werden können und andererseits die Gelbildung schneller abläuft. Thermoplastische Verfahren werden eingesetzt, wenn die Viskosität für die Herstellung von Lösungen und das Giessen dieser Lösungen zu gross wird. Ein Vorteil von thermoplastischen Verfahren besteht auch darin, dass homogene Mischungen von PVA und Quellungsmittel sehr viel schneller hergestellt werden können als durch Lösungsverfahren, wobei dann ausserdem meist mit Autoklaven gearbeitet werden muss. Durch Extrusion bsw. kann eine blasenfreie homogene Mischung innerhalb von 1-5 min erhalten werden, während die Herstellung von Lösungen etwa eine Stunde dauert und die Lösungen typischerweise Luftblasen aufweisen, die mit zunehmender Viskosität der Lösung immer schwieriger zu entfernen sind. Ausserdem ermöglichen thermoplastische Verfahren auch eine kontinuierliche Herstellung von PVA-Quellungsmittel Mischungen und können im Prinzip beliebig grosse Mengen verarbeitet werden, während bei den Lösungsverfahren, die als Batch Verfahren durchgeführt werden, typischerweise im 100g Bereich gearbeitet wird.

Bei Konzentrationen Cp im Bereich von etwa 30-40% kann eine Gelbildung auch ohne freeze/thaw Verfahren erfolgen, bsw. durch Lagerung der Mischung bei einer Temperatur oberhalb des Gefrierpunktes der Mischung. Die optimale Lagerungstemperatur nimmt dabei mit Cp zu, sie ist jedoch auch vom Anteil an PVA2 und den Strukturparametern der PVA abhängig. In diesem Konzentrationsbereich sind die mechanischen Eigenschaften, welche durch freeze/thaw Verfahren bzw. ohne freeze/thaw Verfahren erreicht werden können in etwa vergleichbar. Eine Lagerung ist jedoch gegenüber freeze/thaw Verfahren deutlich einfacher. Die mechanischen Eigenschaften nehmen mit zunehmender Konzentration Cp deutlich zu.

Bei Konzentrationen Cp von > 40% werden durch Lagerung gegenüber freeze/thaw Verfahren zunehmend bessere mechanische Eigenschaften erhalten, bei Konzentrationen > 50% werden Wärmebehandlungen zunehmend vorteilhaft. Bei einer Konzentration Cp von bsw. 60% kann eine Gelbildung, insbesondere beim Einsatz eines nennenswerten Anteils an PVA2 bereits bei Temperaturen um 100°C einsetzen.

Im Konzentrationsbereich Cp, wo eine Geldbildung durch Lagerung oberhalb des Gefrierpunktes sinnvoll ist, nehmen die mechanischen Eigenschaften mit der Lagerungszeit deutlich zu und nimmt der Quellgrad in Wasser deutlich ab, wobei die Kinetik durch einen Anteil an kurzkettigen PVA2 und durch eine reguläre Struktur der eingesetzten PVA beschleunigt wird.

Im ganzen Konzentrationsbereich Cp können alternativ oder zusätzlich verschiedene weitere Verfahrensschritte angewandt werden, um die Netzwerkdichte und damit die mechanischen Eigenschaften zu erhöhen und den Quellgrad zu reduzieren. Bsw. können die PVA-Quellungsmittel Mischungen langsam in Atmosphären mit eingestellter Wasseraktivität auf einen Gleichgewichtswassergehalt getrocknet werden, wobei gegebenenfalls anschliessend eine Wärmebehandlung bei Temperaturen von z.B. 100 - 180°C durchgeführt wird, nachdem die Gelbildung mindestens teilweise stattgefunden hat, kann das Gel gequollen und in diesem Zustand einem freeze/thaw Verfahren unterzogen werden. Auch eine Vernetzung durch hochenergetische Strahlung ist nach teilweiser bis vollständiger Gelbildung möglich. Im Stand der Technik sind eine Vielzahl von Verfahren und Varianten beschrieben, die bisher jedoch nur auf PVA-Quellungsmittel Mischungen angewandt wurden, die mittels Lösungsverfahren hergestellt wurden. Diese Verfahren können alternativ oder zusätzlich auch in dem Konzentrationsbereich Cp angewandt werden, der durch den Einsatz von thermoplastischen Verfahren zugänglich gemacht werden konnte, sowie auf PVA-Quellungsmittel Mischungen, welche einen Anteil an PVA2 und/oder PVA3 aufweisen.

Bisherige PVAG sind typischerweise opak, um Transparenz zu erhalten werden organische Lösungsmittel eingesetzt, die dann vollständig aus dem Gel wieder entfernt werden müssen. Bei den erfindungsgemässen Gelen wurde festgestellt, dass beim Einsatz von thermoplastischen Verfahren bei Cp von grösser als etwa 30% auch vollständig transparente PVAG erhalten werden konnten, wobei diese Transparenz auch nach Quellung erhalten werden konnte, sowohl bei PVAG mit und ohne einen Anteil an PVA2. Diese Transparenz ist wahrscheinlich darauf zurückzuführen, dass bei hohen Cp die typischen Strukturgrössen der PVAG (Mikroporosität) unterhalb der Wellenlänge von sichtbarem Licht liegen, wodurch die PVAG für diese Wellenlänge homogen erscheinen und keine Trübung eintritt. Erstaunlicherweise konnte die Transparenz auch dann erhalten werden, wenn die PVAG nach der Gelbildung bei Cp > 30% durch Quellung einen Wassergehalt von > 70% auswiesen. Somit konnten auf einfache Art und Weise transparente PVAG bei Wassergehalten < rund 80% erhalten werden.

### Quellungsmittel

Als Quellungsmittel werden hier Quellungsmittel im engeren Sinne, als auch Lösungsmittel bezeichnet. Das wichtigste Quellungsmittel ist Wasser und Wasser wird in den meisten Fällen als alleiniges Quellungsmittel eingesetzt, oder in Mischungen mit anderen Quellungsmitteln, daneben kommen jedoch die im Stand der Technik beschriebenen Lösungs- und Quellungsmittel und Mischungen davon in Frage wie bsw. DMSO, Dimethylformamid, Acetamid oder Polyole wie bsw. Glycerin, Erythritol, Xylitol, Sorbitol, Mannitol, Galactitol, Tagatose, Lactitol, Maltitol, Maltulose, Isomalt, Methylenglycol, Ethylenglycol, Diethylenglycol, Triethylenglycol, Propylenglycol, Butandiol, Pentandiol, Hexantriol. Das Quellungsmittel kann auch einen Anteil an Salz aufweisen (physiologische Salzlösung).

### Weitere Polymere

Neben PVA kann das PVAG zur Modifikation der Eigenschaften und für spezifische Anwendungen weitere Polymere enthalten, bsw. synthetische Polymere wie bsw. Polycarbonate, Polyacrylate und Polymethacrylate, Polyethylenglycole, Polythylenoxide, Polyvinylpyrrolidone, Polycaprolactone oder Polymere natürlichen Ursprungs wie bsw. Hydrokolloide und Polysaccharide, insbesondere Stärke und Stärke Derivate.

### Zusatzstoffe

Als Zusatzstoffe werden einfache Füllstoffe und funktionale Füllstoffe bzw. Wirkstoffe bezeichnet wie bsw. Tonmineralien für PVAG, die als Kühlmedium eingesetzt werden, oder antimikrobielle Stoffe für PVAG, die als Wundabdeckungen eingesetzt werden, oder Arzneistoffe für PVAG, die als Abgabesysteme dieser Arzneistoffe eingesetzt werden, bsw. in Form von dermalen Gelen, Pillen oder Tabletten. Im Weiteren wird bezüglich der Zusatzstoffe auf den Stand der Technik zu PVAG verwiesen.

### Anwendungen

Die erfindungsgemässen PVAG können bisherige PVAG in all deren Anwendungen ersetzen, wobei ein solcher Ersatz aufgrund der vereinfachten Herstellungsverfahren und der verbesserten mechanischen Eigenschaften vorteilhaft ist. Typische Anwendungen von PVAG liegen im Bereich der Biomedizin, bzw. im Bereich des Tissue- und Scaffold-Engineering und in der Orthopädie, bsw. PVAG als künstliche Organe und Membranen, als Herzklappen, Gefässe, Harnröhren, Sehnen, Knorpel, Meniskus oder Bandscheiben, weiter können PVAG vorteilhaft als dermale Gele eingesetzt werden, bsw. als Wundabdeckungen und/oder zur kontrollierten Abgabe von Wirkstoffen über die Haut, sowie für als Controlled Release Systeme für orale, rektale und implantierbare Wirkstoffformulierungen, wie auch als Release Systeme im Bereich der Landwirtschaft (Herbizide, Fungizide, Insektizide et.). Weitere Anwendungen betreffen Filter und technische Membranen, Analytikgele im Bereich der Chromatographie und Elektrophorese oder den Einsatz von PVAG als Kühl- und Isolationsmedium, als hydrophile Filme und Folien oder als Substrate für biologische Kulturen.

### Beispiele

### Herstellung von PVAG

Die Herstellung der erfindungsgemässen PVAG erfolgte mit einem Brabender Kneter, wobei PVA in Form von Granulat zusammen mit Wasser bei Drehzahlen von 80-120upm und Massentemperaturen von 95 - 105°C während 3 - 7min plastifiziert und somit eine thermoplastische Schmelze erhalten wurde. Bei PVAG mit einem Anteil an PVA2 von > 15% wurde zuerst PVA1 zumindest teilweise plastifiziert und erst dann das kurzkettige PVA2 zugegeben. Wurden PVA1 und PVA2 bei hohen Anteilen an PVA2 zusammen plastifiziert, so bildete das PVA2 schnell eine Schmelze von vergleichsweise tiefer Viskosität, wodurch die Applikation von signifikanten Scherkräften auf das PVA1 verunmöglicht wurde und die Plastifizierung des PVA1 sehr lange dauerte oder ganz verunmöglicht wurde.

Die erhaltene Schmelze wurde sodann in einer Plattenpresse zu Filmen von 0.5mm Dicke gepresst. Bei Wassergehalten W > 50% lag die Presstemperatur bei 120°C, bei tieferen Wassergehalten bei 140°C. Nach 5min Presszeit wurde die Presse mit maximaler Kühlrate abgekühlt. Die Filme wurden sodann mittels Saran Folie eingepackt, um den Wassergehalt konstant zu halten. Diese von der Atmosphäre geschützten Filme wurden bei Raumtemperatur gelagert und/oder freeze/thaw Behandlungen unterzogen. Beim freeze/thaw Verfahren wurden die Filme mit einer Geschwindigkeit von rund 0.2°C auf -20°C abgekühlt, während 12 Stunden bei dieser Temperatur gelagert und anschliessend mit 0.2°C wieder aufgetaut und gegebenenfalls erneut eingefroren. Der Wassergehalt der Filme wurde durch Wägung des Trocknungsverlusts über Phosphorpentoxid während 24h bestimmt.

Das als Referenz untersuchte PVAG (PV21) wurde erhalten, indem zuerst bei 95°C während 1h eine Lösung mit Cp = 13% hergestellt wurde, welche dann zu einem Film von 0.5mm Dicke gegossen wurde. Um den Wassergehalt bei den folgenden freeze/thaw Zyklen konstant zu halten wurde der Film ebenfalls mit Saran Folie abgedeckt. Die freeze/thaw Zyklen wurden wie oben beschrieben durchgeführt.

### Analysen

Die mechanischen Eigenschaften wurden mit einem Instron Tensile Tester durchgeführt, die Proben wurden aus den Filmen herausgestanzt und wiesen eine Probenlänge von 13mm und eine Breite von 2mm auf. Die Dehngeschwindigkeit betrug 10cm/min. Die erhaltenen Messwerte sind jeweils Mittelwerte von mindestens 5 einzelnen Zugversuchen. Zur Kontrolle wurde nach dem Zugversuch der Wassergehalt der untersuchten Proben bestimmt.

Zur Messung der Quellgrade wurden Filmproben mit dem Gewicht MO bei RT in destilliertem Wasser während 24h gelagert. Der Quellgrad wurde dann als Q = Mq/MO bestimmt, wobei Mq das Gewicht des gequollenen Films war. Zur Messung von Mq wurde das Oberflächenwasser mit saugfähigem Papier entfernt.

### Beispiel 1

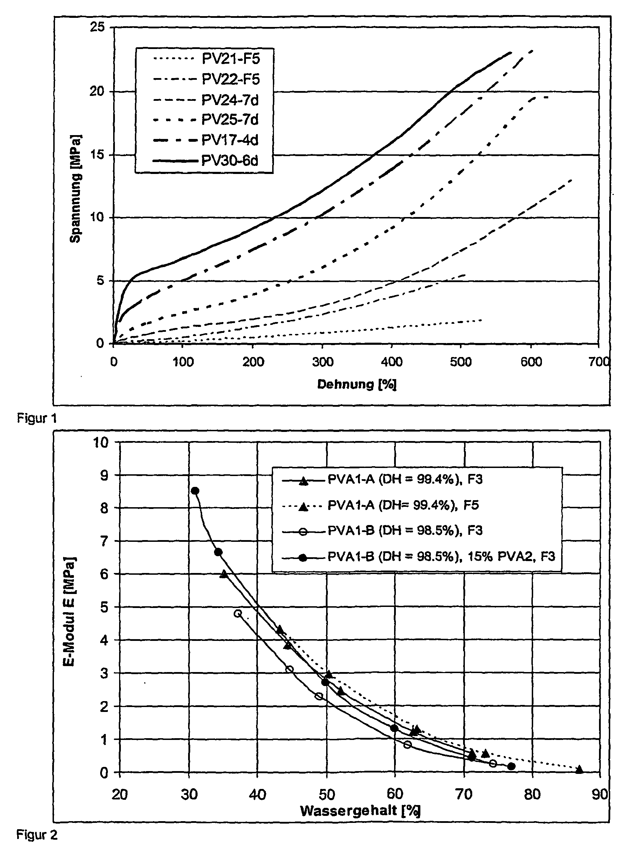

In Figur 1 sind die Spannungs-Dehnungskurven verschiedener PVAG aufgeführt. Die Zusammensetzung der PVAG und die Parameter der Herstellung sind aus Tabelle 1 ersichtlich:

**Tabelle 1 NB = Vergleichsbeispiel; Erf = erfindungsgemäß)**

| **Nr.** | **PVA1** | **PVA2** | **PVA2 [%]** | **W [%]** | **Behandlung** |
|---|---|---|---|---|---|
| | | | | | |
| PV21-F5 | DP = 4500, | | 0 | 87 | 5 Zyklen |
| (VB) | DH = 99.4 mol% | | | | |
| PV22-F5 | DP = 4500, | | 0 | 73 | 5 Zyklen |
| (VB) | DH = 99.4 mol% | | | | |
| PV24-7d | DP = 4500, | | 0 | 52 | 7 Tage bei RT |
| (VB) | DH = 99.4 mol% | | | | |
| PV25-7d | DP = 4500, | | 0 | 41 | 7 Tage bei RT |
| (VB) | DH = 99.4 mol% | | | | |
| PV17-4d | DP = 4500, | DP = 360, | 20 | 33 | Getempert bei 70°C, |
| (Erf) | DH = 98.5 mol% | DH = 98.5 mol% | | | dann 4 Tage bei RT |
| PV30-6d | DP = 4500, | DP = 360, | 40 | 28 | Getempert bei 110°C, |
| (Erf) | DH = 98.5 mol% | DH = 98.5 mol% | | | dann 6 Tage bei RT |

Das PVAG PV21-F5 wurde entsprechend dem Stand der Technik mit Cp = 13%, bzw. mit einem Wassergehalt W = 87% aus einer Lösung erhalten, die 5 freeze/thaw Zyklen unterworfen wurde. Die zugehörige Spannungs-Dehnungskurve repräsentiert die mechanischen Eigenschaften, welche entsprechend dem Stand der Technik ausgehend von einer Lösung und anschliessenden freeze/thaw Zyklen erhalten werden können. Die Spannung nimmt dabei im Zugversuch kontinuierlich zu, wobei die Steigung der Kurve ebenfalls zunimmt und im ganzen Dehnungsbereich die zweite Ableitung der Kurve positiv ist, d.h. eine positive Krümmung der Kurve besteht.

Das PVAG PV22-F5 wurde mit einem Wassergehalt W = 73% mittels eines thermoplastischen Verfahrens hergestellt, da bei diesem Wassergehalt die Herstellung einer Lösung infolge zu hoher Viskosität nicht mehr möglich war. Die hochviskose PVA-Wasser Mischung wurde sodann 5 freeze/thaw Zyklen unterworfen. Es wurde ein erhöhter E-Modul um 0.5MPa und eine erhöhte Festigkeit um 5MPa gemessen, wobei die Krümmung der Kurve wiederum im ganzen Dehnungsbereich positiv ist. Die mechanischen Eigenschaften von PV22-F5 sind charakteristisch für PVAG, die aus der Lösung mit nachfolgenden freeze/thaw Zyklen erhalten werden können, wenn anschliessend zusätzliche Verfahren angewandt werden wie bsw. eine teilweise Gefriertrocknung oder Trocknung bei tiefen relativen Luftfeuchtigkeiten. Somit repräsentiert PV22-F5 das Maximum an mechanischen Eigenschaften, das gegenwärtig entsprechend dem Stand der Technik mittels einer Kombination von Verfahren machbar ist. Allerdings wurde bei PV22-F5 ein solches Eigenschaftsprofil allein durch die Anwendung von freeze/thaw Zyklen erhalten, indem mittels eines thermoplastischen Verfahrens eine hohe Konzentration Cp verarbeitet werden konnte.

Das PVAG PV24-7d wurde mit einem Wassergehalt W = 52% mittels eines thermoplastischen Verfahrens hergestellt und anschliessend während 7 Tagen bei RT gelagert. Bei diesem tiefen Wassergehalt ist offensichtlich der Gelierungsvorgang bereits bei RT möglich und wurde somit mit einem vereinfachten Verfahren gegenüber dem Stand der Technik mit einem E-Modul um 2.5MPa und einer Festigkeit um 13MPa deutlich verbesserte mechanische Eigenschaften erhalten, wobei ausserdem die Bruchdehnung von rund 500% auf rund 650% anstieg. Dabei kann auch eine qualitative Veränderung der Spannungs-Dehnungskurve beobachtet werden, indem bei etwa 100% Dehnung eine negative Krümmung auftritt.

Beim PVAG PV25-7d wurde der Wassergehalt weiter auf 41% reduziert, wobei wiederum ohne freeze/thaw Zyklen, allein durch Lagerung bei RT ein PVAG mit nunmehr einem E-Modul um 5MPa und einer Festigkeit um 20MPa bei einer Bruchdehnung von gut 600% erhalten wurde. Die negative Krümmung nach einer anfänglich hohen Steigung der Kurve ist bei diesem PVAG noch deutlicher geworden, d.h. das PVAG kann bereits bei vergleichsweise geringer Dehnung eine hohe Spannung aufnehmen, wodurch im Vergleich mit PVAG entsprechend dem Stand der Technik neue Anwendungsmöglichkeiten realisierbar sind. Das PVAG PV25-7 kann bereits bei einer Dehnung im Bereich von 50% eine Spannung von 2MPa aufnehmen, während das PVAG PV21-F5 diese Spannung erst bei 500% Dehnung erreicht.

Der beschriebene Trend hin zu deutlich verbesserten mechanischen Eigenschaften, insbesondere zu einem steilen Anstieg der Kurven bei kleinen Dehnungen (hoher E-Modul) mit nachfolgender negativer Krümmung setzt sich mit PV17-4d und PV30-6d fort, wo ein Anteil an PVA2 bezogen auf PVA von 20 bzw. 40% eingesetzt wurde. Diese PVAG wurden ebenfalls mit einem thermoplastischen Verfahren und ohne Anwendung von freeze/thaw Zyklen hergestellt, wobei bei PV17-4d die hochviskose PVA-Wasser Mischung bei 70°C getempert und anschliessend 4 Tage bei RT gelagert wurde, während bei PV30-6d die Temperung bei 110°C durchgeführt wurde und das PVAG dann 6d bei RT gelagert wurde. Bei den eingesetzten Wassergehalten von 33 bzw. 28% setzt eine schnelle Gelbildung bereits bei Temperaturen deutlich oberhalb RT ein, während die Gelbildung bei RT langsam abläuft und die Anwendung von freeze/thaw Zyklen vergleichsweise ineffizient ist. Bei PV30-6d wurde ein E-Modul von rund 30MPa und eine Festigkeit von 23MPa bei einer immer noch erstaunlich hohen Dehnung von 550% erhalten, d.h. gegenüber PV21-F5 wurde der E-Modul um einen Faktor von rund 300 verbessert. Dieser massive Anstieg des E-Moduls ist neben dem reduzierten Wassergehalt auch auf den Anteil an einem kurzkettigen PVA2 zurückzuführen, der eine hohe Kristallisationsgeschwindigkeit und eine sehr hohe Kristallinität der PVAG ermöglicht. Erstaunlich ist, dass trotz dem Anteil an kurzkettigen PVA2 die Bruchdehnung immer noch sehr hohe Werte erreicht, was darauf zurückzuführen ist, dass die Mischung von PVA1 und PVA2 nicht zu einer Phasenseparation führt, sondern Heterokristallite gebildet werden. Das PVAG PV30-6d kann unter Zugbeanspruchung bei geringen Dehnungen bereits eine hohe Spannung aufnehmen. Bei Kompression werden solche hohen Spannung bei noch geringerer Deformation erreicht. Damit erfüllt PV30-6d die Anforderungen bezüglich der mechanischen Eigenschaften, welche bsw. für die Anwendung als Bandscheibenersatz Voraussetzung sind.

### Beispiel 2

In Figur 2 ist der Verlauf der E-Moduli von PVAG nach 3 (F3) und 5 (F5) freeze/thaw Zyklen in Funktion des Wassergehaltes W der PVA-Wasser Mischung für verschiedene PVA und PVA Mischungen dargestellt. Mit Ausnahme des PVAG mit 87% Wassergehalt, das ausgehend von einer Lösung hergestellt wurde, wurden alle anderen PVAG mittels thermoplastischer Verfahren hergestellt. Lösungen basierend auf den Polyvinylalkoholen PVA1-A und PVA1-B, welche beide einen Polymerisationsgrad DP von rund 4500 aufweisen, erreichen bei 80°C etwa bei Cp 15%, d.h. bei einem Wassergehalt von 85% die für Lösungen limitierende Viskosität von 10'0OOcPas, sodass bei tieferen Wassergehalten die Herstellung von Lösungen und das Giessen nicht mehr möglich ist. Der Wassergehaltsbereich W < 85% wo eine massive Zunahme des E-Moduls und damit der mechanischen Eigenschaften erhalten werden kann, wird erst durch die erfindungsgemässen PVAG zugänglich. Es kommt klar zum Ausdruck, dass der Wassergehalt der dominierende Parameter bezüglich des resultierenden E-Moduls ist, der mit abnehmendem Wassergehalt immer stärker ansteigt.

Die Kurven zu PVA1-A, F3 und PVA1-A, F5 zeigen einerseits, dass auch PVA-Wasser Mischungen mit reduziertem Wassergehalt und hergestellt mittels thermoplastischer Verfahren nach Anwendung von freeze/thaw Zyklen Gele ergeben, wobei der E-Modul mit der Anzahl der Zyklen zunimmt, wie dies auch bei bisherigen PVAG üblich ist.

Die Kurve zu PVA1-B, F3 liegt gegenüber PVA1-A, F3 im ganzen Wassergehaltsbereich bei tieferen Werten, was darauf zurückzuführen ist, dass der Hydrolysegrad mit 98.5mol% gegenüber 99.4mol% von PVA1-A reduziert ist, wodurch die Kristallisierbarkeit dieser Makromoleküle reduziert ist (Irregularitäten in der Polymerkette).

Die PVAG zu PVA1-B, 15% PVA2, F3 basieren ebenfalls auf PVA1-B mit DH = 98.5%, sie enthalten jedoch bezogen auf den PVA Anteil 15% von PVA2, eines kurzkettigen PVA mit einem Polymerisationsgrad DP von 360 und DH = 98.5mol%. Bei W > 70% bestehen keine signifikanten Unterschiede im E-Modul im Vergleich zu PVA1-B, F3, was erstaunlich ist, da entsprechend dem Stand der Technik beim Einsatz eines PVA mit tiefem DP eine Reduktion der mechanischen Eigenschaften erwartet wird, weshalb PVA mit möglichst hohem DP eingesetzt werden. Noch erstaunlicher ist, dass mit abnehmendem W der E-Modul gegenüber PVA1-B, F3 zunimmt und sogar bei W = ca. 47% die Werte der PVAG von PVA1-A, F3 erreicht, welche auf einem PVA mit DH = 99.4mol% basieren, während PVA2 mit DH = 98.5mol% einen geringeren Hydrolysegrad aufweist. Weiter werden bei W < 45% sogar die E-Moduli von PVA1-A, F5 übertroffen. Hiermit ist gezeigt, dass durch den Einsatz eines Anteils an einem kurzkettigen PVA die mechanischen Eigenschaften der PVAG verbessert werden können und sogar im Vergleich mit PVAG, welche auf PVA mit höherem DH basieren und mehr freeze/thaw Zyklen erlebten, höhere E-Moduli erhalten werden können. Diese Vorteile beim Einsatz eines kurzkettigen PVA (PVA2) zusammen mit einem langkettigen PVA (PVA1) sind in der besseren Kristallisierbarkeit der PVA2 begründet, wodurch auch höhere Netzwerkdichten erreicht werden. Dieser Effekt nimmt mit abnehmendem Wassergehalt zu.

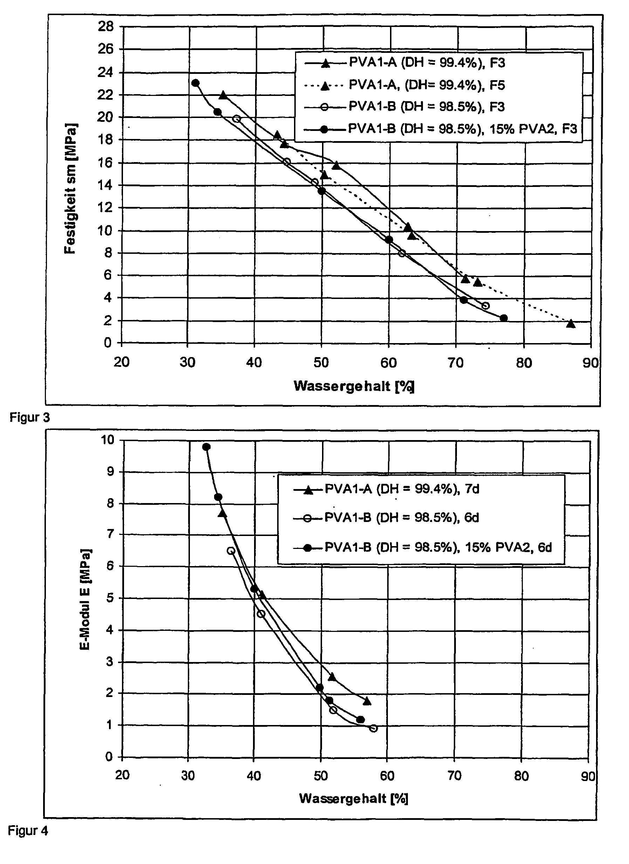

In Figur 3 ist die Festigkeit sm der PVAG in Funktion des Wassergehaltes W für die verschiedenen PVAG dargestellt. Bezüglich dieser Eigenschaft ist der Einfluss eines Anteils von 15% PVA2 nahezu neutral, d.h. indem bei PVA1-B, F3 ein Anteil von 15% durch PVA2 ersetzt wird, resultiert kaum ein Einfluss auf die Festigkeit. Es ist aber anzumerken, dass infolge des Anteils an PVA2 die Viskosität der Schmelze deutlich reduziert und damit die Verarbeitbarkeit erleichtert wurde, was insbesondere bei tiefen W von Bedeutung ist. Gegenüber dem E-Modul E ist die Festigkeit sm von untergeordneter Bedeutung, da die PVAG bei Dehnungen von rund > 50% deutliche irreversible Deformationen erleiden. Beim praktischen Einsatz der PVAG sind solche irreversible Deformationen unterwünscht und darf die Beanspruchung den reversiblen Bereich nicht überschreiten.

### Beispiel 3

In Figur 4 sind die E-Moduli von PVAG erhalten mittels eines thermoplastischen Verfahrens in Funktion des Wassergehaltes W aufgetragen. Die PVAG wurden nach der Formgebung bei RT während 7 bzw. 6 Tagen gelagert, d.h. die PVAG wurden ohne die Anwendung von freeze/thaw Zyklen erhalten. Es wird deutlich, dass insbesondere im Bereich W < 60% PVAG auch ohne die Anwendung von freeze/thaw Zyklen durch einfache Lagerung bei RT erhalten werden können. Dabei weisen die PVAG basierend auf PVA1-A mit dem höheren Hydrolysegrad die höchsten E-Moduli auf. Die PVAG basierend auf PVA1-B enthaltend einen Anteil von 15% an kurzkettigem PVA zeigen im Bereich 50%< W < 60% geringfügig höhere E-Moduli als die PVAG basierend auf PVA1-B, wobei mit abnehmendem W zunehmend die Werte von PVAG basierend auf PVA1-A erreicht werden. Die Situation ist analog zu den PVAG, welche mittels freeze/thaw Verfahren erhalten wurden (Figur 2). Auch hier zeigt sich, dass PVAG enthaltend einen Anteil an PVA2 höhere E-Moduli ergeben und sogar die E-Moduli von PVAG erreicht werden können, welche auf höher hydrolysierten PVA basieren.

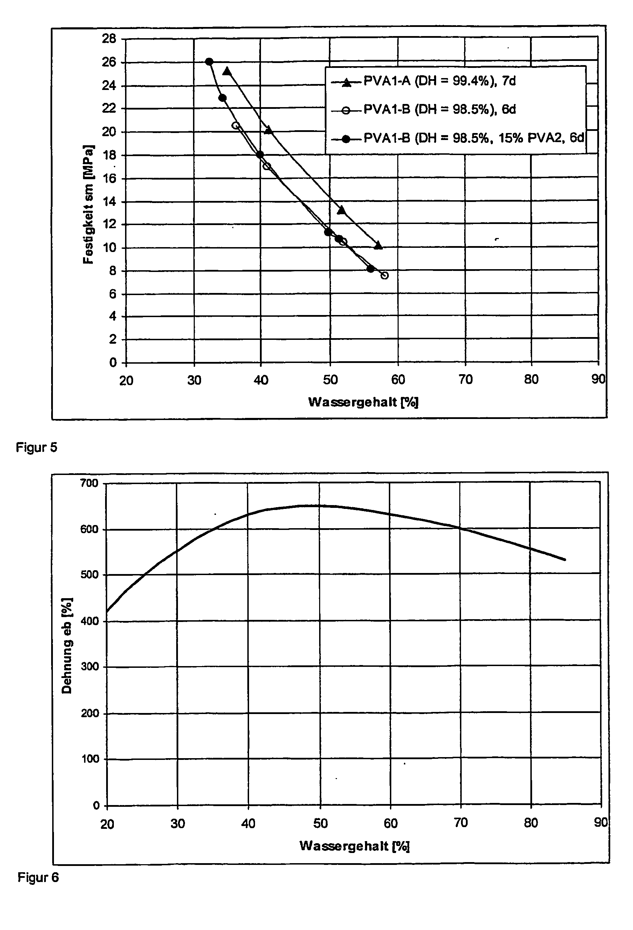

Die Festigkeiten sm in Funktion des Wassergehaltes von PVAG erhalten ohne freeze/thaw sondern mittels einfacher Lagerung bei RT sind in Figur 5 wiedergegeben. Auch hier ist die Situation analog zu den PVAG, welche mittels freeze/thaw Zyklen erhalten wurden (Figur 3).

Die Bruchdehnung eb von PVAG mit entwickeltem Netzwerk ist nur in geringem Masse von der Rezeptur, den Herstellungsparametern und der Lagerungszeit bzw. der Anzahl freeze/thaw Zyklen abhängig. Der wesentliche Parameter ist auch hier der Wassergehalt. In Figur 6 ist die Bruchdehnung eb in Funktion des Wassergehalts wiedergegeben, wobei ein Maximum von rund 650% im Bereich von 40% < W < 60% existiert. Bei höheren und tieferen Wassergehalten W nimmt eb ab, wobei jedoch selbst bei W = 30% mit eb um 550% immer noch sehr hohe Bruchdehnungen erreicht werden.

### Beispiel 4

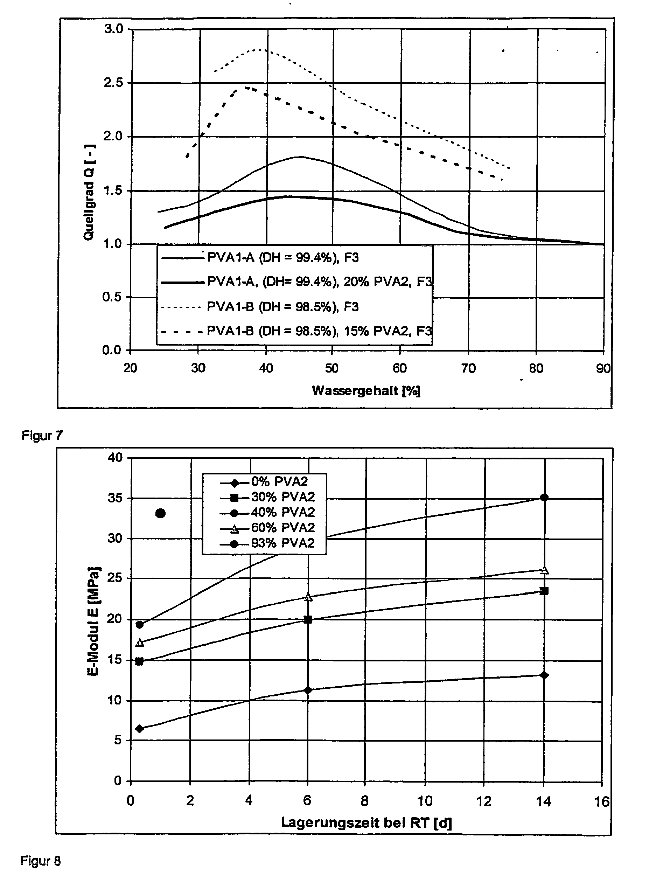

In Figur 7 sind die Quellgrade Q für verschiedene PVAG erhalten nach 3 freeze/thaw Zyklen in Funktion des Wassergehaltes des PVAG aufgeführt. Mit der Anwendung einer höheren Anzahl von Zyklen nehmen die Quellgrade kontinuierlich ab. Der Verlauf der Quellgrade mit dem Wassergehalt von PVAG erhalten durch Lagerung bei RT ist vergleichbar mit dem Verlauf der Quellgrade von PVAG, die mittels freeze/thaw Zyklen hergestellt wurden und wird mit einer Zunahme der Lagerungszeit ebenfalls eine Reduktion der Quellgrade erhalten.

Die Quellgrade von PVA1-B, F3 liegen im ganzen Wassergehaltsbereich bei deutlich höheren Werten im Vergleich mit den Quellgraden von PVA1-B, F3. Dies ist eine Folge des mit DH = 98.5mol% gegenüber DH = 99.4mol% tieferen Hydrolysegrades von PVA1-B bzw. PVA1-A. Im Bereich dieser hohen Hydrolysegrade existiert eine sehr ausgeprägte Abhängigkeit nicht nur des Quellgrades vom Hydrolysegrad. Bei DH = 100mol% sind die Quellgrade im Vergleich mit DH = 99.4% noch deutlich tiefer. Der Einfluss des Hydrolysegrades steht hier stellvertretend für die weiteren Parameter wie 1,2-Glykolgehalt und Taktizität, welche die Kristallisierbarkeit stark beeinflussen. Dabei steigt der Quellgrad mit dem 1,2-Glykolgehalt und sinkt der Quellgrad mit zunehmendem syndiotaktischen Anteil. Um minimale Quellgrade zu erhalten sind daher diese Stoffparameter zu optimieren.

Überraschenderweise liegen die Quellgrade von PVA1-B mit einem Anteil von 15% an kurzkettigem PVA2 bei tieferen Werten als die Quellgrade von PVA1-B ohne einen Anteil an PVA2, d.h. neben den genannten und in ihrer Wirkung bekannten Parametern ist auch ein Anteil an PVA2 hinsichtlich geringer Quellgrade von Bedeutung. Der Vergleich von PVA1-A, F3 mit PVA1-B mit 15% PVA2 zeigt, dass dieser Effekt sogar bei einem mit 98.5mol% vergleichsweise tiefen Hydrolysegrad von PVA2 auftritt. Beim Einsatz eines PVA2 mit höherem Hydrolysegrad ist der Effekt umso ausgeprägter. Dieses Verhalten ist darin begründet, dass mit dem Anteil an PVA2 die Kristallinität und die Netzwerkdichte erhöht werden, d.h. engmaschigere Netzwerke resultieren, welche weniger stark quellen können. Die Resultate zu den Quellgraden lassen erwarten, dass beim Einsatz von PVA1 bei einem Anteil an PVA2, wobei beide PVA maximale Hydrolysegrade, minimale 1,2-Glykolgehalte und hohe syndiotaktische Anteile aufweisen im ganzen Wassergehaltsbereich minimale Quellgrade erhalten werden können, d.h. Quellgrade nur geringfügig grösser als 1.

### Beispiel 5

In Figur 8 ist die Entwicklung der E-Moduli in Funktion der Lagerungszeit bei RT von PVAG mit verschiedenen Anteilen an PVA2 ersichtlich. Die PVAG basieren auf PVA1-B mit DH = 98.5mol% und DP = 4500, eingesetzt wurde als PVA2 ein PVA mit DH = 98.5mol% und DP = 360. Die PVAG wurden mittels eines thermoplastischen Verfahrens mit einem Wassergehalt von 31% hergestellt und bei 110°C getempert. Es kommt deutlich zum Ausdruck, dass die E-Moduli mit dem Anteil an PVA2 zunehmen, was in der guten Kristallisierbarkeit der kurzkettigen PVA2 begründet ist. Insbesondere der Messwert bei 97% PVA2 zeigt dies sehr deutlich. Die Bruchdehnungen eb der PVAG waren erstaunlicherweise selbst bei einem Anteil von 60% PVA2 nicht signifikant vom Anteil an PVA2 abhängig und lagen bei allen PVAG bei knapp 600% mit der Ausnahme von dem PVAG mit 97% Anteil an PVA2, wo trotz des sehr hohen Anteils immer noch rund 100% erreicht wurde. Die Festigkeiten sm zeigten bis zu 40% PVA2 ebenfalls keine deutliche Abhängigkeit vom Anteil an PVA2 und lagen bei etwas mehr als 20MPa bei 6 Tagen Lagerungszeit, während bei 60% Anteil an PVA2 eine Reduktion auf 14MPa festgestellt wurde. Die Quellgrade Q nach 1d Lagerungszeit zeigten eine deutliche Abhängigkeit vom Anteil an PVA2, sie lagen für die Anteile von 0, 30, 40, 60 und 97% bei 1.7, 1.4, 1.3, 1.2 und 1.05.

Bei der Herstellung der thermoplastischen Schmelze bestehend aus PVA1-B und PVA2 sowie 31% Wasser wurde gefunden, dass die Gelbildung bereits bei Temperaturen > 100°C einsetzt, weshalb die Wärmebehandlung bei 110°C durchgeführt wurde. Offensichtlich jedoch findet auch bei RT eine weitere Vernetzung in Funktion der Zeit statt. Durch Einsatz von PVA1 und PVA2 mit höheren Hydrolysegraden, reduziertem 1,2-Glykolgehalt und hohem syndiotaktischem Anteil wird die Kinetik der Netzwerkbildung beschleunigt und können auch noch tiefere Quellgrade erhalten werden.

### Beispiel 6

Mit folgendem Beispiel wird die Entwicklung der mechanischen Eigenschaften bei Lagerung bei RT und bei freeze/thaw Behandlung verglichen. Das PVAG wurde mittels eines thermoplastischen Verfahrens hergestellt, basierend auf einem PVA1-B mit DH = 98.5mol% und DP = 4500, eingesetzt wurde 20% von PVA2 mit DH = 98.5mol% und DP = 360. Das PVAG wurde bei 70°C wärmebehandelt und dann bei RT gelagert, bzw. freeze/thaw Zyklen unterworfen. Die mechanischen Eigenschaften sind in Tabelle 2 aufgeführt:

**Tabelle 2**

| **Behandlung** | **Zyklen** | **t_{RT}** | **Cp** | **E** | **sₘ** | **e_{b}** |
|---|---|---|---|---|---|---|
| | **[]** | **[d]** | **[%]** | **[MPa]** | **[MPa]** | **[%]** |
| | | | | | | |
| **Lagerung** | | 1 | 68 | 7.40 | 21.90 | 560 |
| **Lagerung** | | 3 | 68 | 18.50 | 22.50 | 591 |
| **Lagerung** | | 7 | 68 | 22.30 | 23.50 | 602 |
| **Lagerung** | | 14 | 68 | 24.10 | 24.70 | 621 |
| | | | | | | |
| **Freeze/thaw** | 1 | | 68 | 18.40 | 22.50 | 587 |
| **Freeze/thaw** | 5 | | 68 | 19.40 | 23.60 | 582 |
| | | | | | | |
| **gequollen** | | 7 | 68 | 5.30 | 10.60 | 541 |
| **gequollen** | | 14 | 68 | 10.20 | 14.10 | 583 |
| **gequollen** | | 21 | 68 | 13.70 | 17.40 | 592 |

Nach 3 Tagen Lagerungszeit werden praktisch identische mechanische Eigenschaften erhalten wie nach einem freeze/thaw Zyklus. Während jedoch die mechanischen Eigenschaften bei weiterer Lagerung bei RT zunehmen, ist der Unterschied nach 1 bzw. 3 freeze/thaw Behandlungen nur gering. Die mechanischen Eigenschaften der in Wasser gequollenen PVAG nehmen mit der Lagerungszeit bei RT ebenfalls deutlich zu. Beim Einsatz von vollhydrolysierten PVA mit minimalem 1,2-Glykolgehalt und hohem syndiotaktischem Anteil sind die mechanischen Eigenschaften der gequollenen PVAG nahezu identisch mit den mechanischen Eigenschaften der entsprechenden ungequollenen PVAG.

## Patentansprüche

1. Polyvinylalkohol Gel, **dadurch gekennzeichnet, dass** das Gel mindestens zwei Polyvinylalkohole der Typen PVA1 und PVA3, ein Quellungsmittel sowie einen Polyvionylalkohol des Typs PVA2 aufweist, wobei die Polymerisationsgrade DP von PVA1 und PVA3 > 1000 sind, **dadurch gekennzeichnet, dass** der Polymerisationsgrad DP von PVA2 im Bereich 50-1000 liegt und PVA1 und PVA2 vorwiegend linear sind, während PVA3 einen Anteil an Langkettenverzweigungen aufweist, und dass der Hydrolysegrad von PVA1, PVA2 und PVA3 in mol% > 95 ist.

2. Polyvinylalkohol Gel, nach Anspruch 1, **dadurch gekennzeichnet, dass**
a) der Hydrolysegrad von PVA1, PVA2 und PVA3 in mol% > 95 ist; und
b) der Gehalt von PVA1, PVA2 und PVA3 an 1,2-Glycol in mol% < 3 ist; und
c) die Anzahl an Kurzkettenverzweigungen von PVA1, PVA2 und PVA3 pro Monomereinheit < 10⁻² ist.

3. Polyvinylalkohol Gel, nach Anspruch 2, **dadurch gekennzeichnet, dass** PVA1, PVA2 und PVA3 eine ataktische Konformation haben.

4. Polyvinylalkohol Gel, nach einem der vorangehenden Ansprüche, **dadurch gekennzeichnet, dass**
a) PVA1 und PVA3 einen Polymerisationsgrad DP > 1000aufweisen; und
b) PVA2 einen Polymerisationsgrad DP im Bereich von 50-1000 aufweist.

5. Polyvinylalkohol Gel, nach einem der vorangehenden Ansprüche, **dadurch gekennzeichnet, dass**
a) der Anteil an PVA2 bezogen auf PVA in Gew. % im Bereich 1-95 liegt; und
b) der Anteil an PVA3 bezogen auf PVA in Gew. % im Bereich 1-80 liegt; und
c) der Anteil an PVA bezogen auf PVA und Quellungsmittel in Gew. % im Bereich 5-90 liegt.

6. Polyvinylalkohol Gel, nach einem der vorangehenden Ansprüche, **dadurch gekennzeichnet, dass** dessen Quellgrad Q in Wasser im Bereich 1.01-3 liegt.

7. Verwendung eines Polyvinylalkohol Gels nach einem der vorangehenden Ansprüche im Bereich der Biomedizin, bzw. im Bereich des Tissue- und Scaffold-Engineering und in der Orthopädie, im Bereich der Medizin und Pharmazeutik als dermale Gele, sowie als Controlled Release Systeme für orale, rektale und implantierbare Wirkstoffformulierungen, im Bereich der Landwirtschaft als Release Systeme für Herbizide, Fungizide, Insektizide, Pheromone oder Düngemittel, im technischen Bereich als Filter und technische Membranen, in der Analytik für chromatographische Trennverfahren und die Elektrophorese, sowie als Kühl- und Isolationsmedium, als hydrophile Filme und Folien oder als Substrate für biologische Kulturen oder als Controlled Release System von Riechstoffen.

8. Verwendung nach Anspruch 7, **dadurch gekennzeichnet, dass** das Polyvinylalkohol Gel im Bereich der Biomedizin als künstliche Organe und Membranen, Herzklappen, Gefässe, Harnröhren, Sehnen, Knorpel, Meniskus oder Bandscheiben und im Bereich der Medizin und Pharmazeutik als Wundabdeckungen und/oder zur kontrollierten Abgabe von Wirkstoffen über die Haut verwendet wird.

## Claims

1. A polyvinyl alcohol gel, **characterised in that** the gel comprises at least two polyvinyl alcohols of the types PVA1 and PVA3, a swelling agent and a polyvinyl alcohol of the type PVA2, wherein the degrees of polymerisation DP of PVA1 and PVA3 are > 1000, **characterised in that** the degree of polymerisation DP of PVA2 lies in the range of 50 to 1000 and PVA1 and PVA2 are predominantly linear, whereas PVA3 comprises a fraction of long-chain branchings, and **in that** the degree of hydrolysis of PVA1, PVA2 and PVA3 in mole % is > 95.

2. The polyvinyl alcohol gel according to claim 1, **characterised in that**
a) the degree of hydrolysis of PVA1, PVA2 and PVA3 in mole % is > 95; and
b) the 1.2-glycol content of PVA1, PVA2 and PVA3 in mole % is < 3; and
c) the number of short-chain branchings of PVA1, PVA2 and PVA3 per monomer unit is < 10⁻².

3. The polyvinyl alcohol gel according to claim 2, **characterised in that** PVA1, PVA2 and PVA3 have an atactic conformation.

4. The polyvinyl alcohol gel according to any one of the preceding claims, **characterised in that**
a) PVA1 and PVA3 have a degree of polymerisation DP > 1000; and
b) PVA2 has a degree of polymerisation DP in the range of 50 to 1000.

5. The polyvinyl alcohol gel according to any one of the preceding claims, **characterised in that**
a) the fraction of PVA2 based on PVA in wt. % lies in the range of 1 to 95; and
b) the fraction of PVA3 based on PVA in wt. % lies in the range of 1 to 80; and
c) the fraction of PVA based on PVA and swelling agent in wt. % lies in the range of 5 to 90.

6. The polyvinyl alcohol gel according to any one of the preceding claims, **characterised in that** the degree of swelling Q thereof in water lies in the range of 1.01 to 3.

7. The use of a polyvinyl alcohol gel according to any one of the preceding claims in the field of biomedicine, or in the field of tissue and scaffold engineering and in orthopaedics, in the field of medicine and pharmaceuticals as dermal gels, and as controlled release systems for oral, rectal and implantable active substance formulations, in the field of agriculture as release systems for herbicides, fungicides, insecticides, pheromones or fertilisers, in the technical field as filters and technical membranes, in analysis for chromatographic separation methods and electrophoresis, and as cooling and insulating media, as hydrophilic films and foils or as substrates for biological cultures or as controlled release systems of perfumes.

8. The use according to claim 7, **characterised in that** the polyvinyl alcohol gel is used in the field of biomedicine as artificial organs and membranes, heart valves, vessels, urethra, tendons, cartilage, meniscus or intervertebral discs, and in the field of medicine and pharmaceuticals as wound coverings and/or for the controlled release of active substances via the skin.

## Revendications

1. Gel d'alcool de polyvinyle, **caractérisé en ce que** ce gel contient au moins deux alcools de polyvinyle de types PVA1 et PVA3, un agent de gonflement, de même qu'un alcool de polyvinyle de type PVA2, les degrés de polymérisation DP de PVA1 et PVA3 étant > 1000, **caractérisé en ce que** le degré de polymérisation DP de PVA2 est de l'ordre de 50 à 1000 et PVA1 et PVA2 sont majoritairement linéaires, tandis que PVA3 présente une proportion de ramifications à chaîne longue et que le degré d'hydrolyse de PVA1, PVA2 et PVA3 est > 95 % en moles.

2. Gel d'alcool de polyvinyle selon la revendication 1, **caractérisé en ce que**
a) le degré d'hydrolyse de PVA1, PVA2 et PVA3 est > 95 % en moles ; et
b) la teneur en 1,2-glycol de PVA1, PVA2 et PVA3 est > 3 % en moles ; et
c) le nombre de ramifications à chaîne courte de PVA1, PVA2 et PVA3 est < 10⁻² par unité de monomère.

3. Gel d'alcool de polyvinyle selon la revendication 2, **caractérisé en ce que** PVA1, PVA2 et PVA3 ont une conformation atactique.

4. Gel d'alcool de polyvinyle selon une des revendications précédentes, **caractérisé en ce que**
a) PVA1 et PVA3 présentent un degré de polymérisation DP > 1000 ; et
b) PVA2 présente un degré de polymérisation DP de l'ordre de 50 à 1000.

5. Gel d'alcool de polyvinyle selon une des revendications précédentes, **caractérisé en ce que**
a) la proportion de PVA2 par rapport à PVA est de l'ordre de 1 à 95 % en poids ; et
b) la proportion de PVA3 par rapport à PVA est de l'ordre de 1 à 80 % en poids ; et
c) la proportion de PVA par rapport à PVA et à l'agent de gonflement est de l'ordre de 5 à 90 % en poids.

6. Gel d'alcool de polyvinyle selon une des revendications précédentes, **caractérisé en ce que** son degré de gonflement Q dans l'eau est de l'ordre de 1,01 à 3.

7. Utilisation d'un gel d'alcool de polyvinyle selon une des revendications précédentes dans le secteur de la biomédecine ou dans le secteur de l'ingénierie tissulaire et de croissance tissulaire (scaffold) et de l'orthopédie, dans le secteur de la médecine et de la pharmacie comme gels dermiques et comme systèmes de délivrance contrôlée pour des formulations de substances actives orales, rectales et implantables, dans le secteur de l'agriculture comme systèmes de délivrance d'herbicides, fongicides, insecticides, phéromones ou engrais, dans le secteur technique comme filtres et membranes techniques, de l'analyse pour les procédés de séparation chromatographiques et l'électrophorèse ainsi que comme moyens réfrigérants et isolants, comme films et feuilles hydrophiles ou comme substrats pour les cultures biologiques ou comme systèmes de délivrance contrôlée de parfums.

8. Utilisation selon la revendication 7, **caractérisée en ce que** le gel d'alcool de polyvinyle est employé dans le secteur de la biomédecine sous forme d'organes et membranes, valves cardiaques, vaisseaux, urètres, tendons, cartilages, ménisques ou ligaments artificiels et dans le secteur de la médecine et de la pharmacie comme couvertures de plaies et/ou pour la délivrance contrôlée de substances actives via la peau.
